(19) Europäisches Patentamt / European Patent Office / Office européen des brevets

(11) **EP 3 604 090 B1**

(12) **EUROPEAN PATENT SPECIFICATION**

(45) Date of publication and mention
of the grant of the patent:
**11.09.2024   Bulletin 2024/37**

(21) Application number: **18771721.0**

(22) Date of filing: **16.03.2018**

(51) International Patent Classification (IPC):
**B62D 33/04** *(2006.01)*        **B62D 35/00** *(2006.01)*
**B62D 37/02** *(2006.01)*        **B61D 17/02** *(2006.01)*

(52) Cooperative Patent Classification (CPC):
**B62D 35/00**

(86) International application number:
**PCT/BY2018/000005**

(87) International publication number:
**WO 2018/170574 (27.09.2018 Gazette 2018/39)**

(54) **HIGH-SPEED TRANSPORT MODULE (VARIANTS)**

HOCHGESCHWINDIGKEITSTRANSPORTMODUL (VARIANTEN)

MODULE DE TRANSPORT HAUTE VITESSE (ET VARIANTES)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2017   EA 201700220**

(43) Date of publication of application:
**05.02.2020   Bulletin 2020/06**

(73) Proprietor: **Unitsky, Anatoli Eduardovich
222838, Minsk region, Pukhovichi district (BY)**

(72) Inventor: **Unitsky, Anatoli Eduardovich
222838, Minsk region, Pukhovichi district (BY)**

(74) Representative: **Biesse S.r.l.
Via Corfù, 71
25124 Brescia (IT)**

(56) References cited:
NL-A- 6 809 536          RU-C1- 2 085 427
RU-C1- 2 201 368          RU-C1- 2 203 194
US-A1- 2004 007 149          US-A1- 2008 238 140
US-A1- 2010 060 030          US-A1- 2011 198 145
US-B2- 8 960 771

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The invention relates to the area of transport engineering, particularly, building of transportation vehicles with high-performance aerodynamic properties, and can be used in high-speed string-type transport system by Yunitski.

### Background Art

There exist established engineering solutions, aimed at improving aerodynamics of bodies of transportation vehicles, whereby optimization of aerodynamic properties of the bodies is achieved thanks to likening their form to the revolutional shape, taking into account the design and ergonomic requirements thereto, namely as to transportation vehicles (В.-Г. Хуро. Аэродинамика автомобиля. М.: Машиностроение, 1987, с.32, 42).

However, meeting the requirements to improve body aerodynamics involves contradiction with the requirements of internal layout and ergonomics, which resultantly would not permit to optimally utilize body roominess. Also, the known engineering solutions do not provide for consideration of actual operation conditions, in cases when the transportation vehicle is in close proximity with roadway, not allowing to minimize the values of aerodynamic drag coefficient.

A number of patents known which contain description of transport modules for string-type transport system by Yunitski, aimed at enhancing energy data via reducing losses thanks to the improved aerodynamic properties, of those modules, and higher stability of the position of body in the direction of runway. These are the following: patents RU2201368, RU2201369, published 27.03.2003.; patents RU2203194, RU2203195, published 27.04.2003г.; Eurasian patents EA003490, EA003533, EA003535. The high-speed transport modules presented in the above-mentioned documents are characterized by a streamlined body with the mating portions: a spheroidal front, a tear-drop mid and cone-shaped rear ones. Hereby, the cone-shaped rear portion of the body of mentioned transport modules is performed with generatrices having alternating-sign camber.

At the same time, the high-speed transport modules according to patents EA003535 and RU2201368 contain positioned on the upper surface of body two symmetrical longitudinal sections with negative camber of surface, which are mated with the side surfaces and upper surface of body. The known transport modules according to patents EA003490 and RU2201369 as well contain two symmetrical longitudinal sections with negative camber of surface, which are mated with side surfaces and upper surface of body, but positioned on the bottom surface of body.

Besides having a streamlined shape, in order to minimize aerodynamic drag coefficient and improve dynamic stability, the known high-speed transport modules, described in the given patents EA003533, RU2203194 and RU2203195, are characterized by having the bodies formed with consideration of certain ratios of geometry variables of included components. The intricacy of the transport modules according to patents EA003533 and RU2203195 is that the cone-shaped rear portion of their body is performed with generatrix having alternating-sign camber, whereas its surface of negative curvature has a plane-wedge profile, the rib of which forms the rear edge of body. This edge can be positioned horizontally or vertically, thereby forming various contour shapes depending on the given direction of reinforcing body steadiness.

Most close to the present invention is the high-speed transport module according to patent RU2203194, published 27.04.2003, designed for use in string-type transport system by Yunitski, containing a streamlined body with the mating spheroidal front, tear-drop mid and cone-shaped rear portions, whereby the bottom surface of the mid portion is flat. To connect with rail track, two trains of wheels are located in the bottom portion of body. Motion of transport module is secured by the driving unit and control system mounted in the body. 2. Further related prior art is known from RU2201368 and US2011198145.

At velocity values, reached by string-type track structure by Yunitski (more than 300 km/hour), a primary task is to lower aerodynamic drag coefficient of transport module, because air drag in traction resistance accounts for more than 90%. Correspondingly, drive power of transportation vehicle and its efficiency, for 90% and more, is defined by namely aerodynamic properties of the module body. Also, at high velocity values of transport module, the impact of various external factors makes it necessary to stabilize the position of transport module in the direction of its motion path.

The shape of body of a traditional transport module does not ensure the minimization of aerodynamic drag coefficient. This is due to the fact that, while optimal airflow of the rear portion of body is guaranteed, still, in the known engineering solution, the task of optimal choice of the square of the front surface of body has not been solved. This task, as well as aerodynamic drag coefficient, directly impacts the air resistance to transport module motion. The given issues do not allow to optimize the parameters of transport module as per output performance.

The absence of means to stabilize the position of transport module in the direction of its motion path leads to its susceptibility to the impact of various anti-balance external factors.

## Summary of invention

The aim of the present invention is to enhance energy data of the claimed high-speed transport module which is attained via lowered losses thanks to the improved aerodynamic properties, increased stabilization of the position of transport module in the direction of its motion path, as well as expansion of lineup of vehicles for transport-communication system by Yunitski.

The specified result is achieved by the following: in high-speed transport module, which contains a streamlined body with the seamlessly mating front and rear portions and two trains of wheels located in the bottom portion of body, *according to the first embodiment,* the front and rear portions of body are cone-shaped with non-rectilinear generatrices having alternating-sign camber, or the totality of rectilinear and non-rectilinear sections, arranged with alternating-sign directivity, whereby the angle $\gamma$, °, between the axis of body and the line tangent to the generatrix in longitudinal section, in both front and rear portions of body, does not exceed 30°, whereas the conjugation line of surfaces of reverse camber in the front portion of body is located from the conjugation line between front and rear portions of body at the distance $L_{PP}$, m, limited by the ratio:

$$0{,}05 \leq L_{PP}/L_{PPZ} \leq 0{,}75,$$

the conjugation line of surfaces of reverse camber in the rear portion of body is located from the conjugation line between front and rear portions of body at the distance $L_{PZ}$, m, limited by the ratio:

$$0{,}05 \leq L_{PZ}/L_{PPZ} \leq 0{,}75,$$

where $L_{PPZ}$, m, - length of the portion of body between the conjugation lines of surfaces of reverse camber in the front and rear portions of body;
and length $L_K$, m, of body and its height $H_1$, m, (according to the first embodiment) in cross section along the conjugation line between front and rear portions of body are connected by the ratio:

$$2 \leq L_K/H_1 \leq 20.$$

Achieving the specified result is substantiated also by the fact that the area $S_{PZ}$, m², along the conjugation line between front and rear portions of body is connected with the area $S_P$, m², of cross-section along the conjugation line of surfaces of reverse camber in the front portion of body, and area $S_Z$, m², of cross-section along the conjugation line of surfaces of reverse camber in the rear portion of body, by the following ratios:

$$1{,}2 \leq S_{PZ}/S_P \leq 20;$$

$$1{,}2 \leq S_{PZ}/S_Z \leq 20.$$

Hereby, the lengths of the front and rear portions of body are connected by the ratio:

$$0{,}25 \leq L_P/L_Z \leq 4,$$

where $L_P$, m - length of the front portion of body from the foremost point to the conjugation line between front and rear portions of body;
$L_Z$, m - length of the rear portion of body from the rearmost point to the conjugation line between rear and front portions of body.

Achieving the specified result is substantiated also by the fact that in high-speed transport module, which contains a streamlined body with the seamlessly mating front, mid and rear portions and two trains of wheels located in the bottom portion of body, *according to the second embodiment,* front and rear portions of body are cone-shaped with non-rectilinear generatrices having alternating-sign camber, or the totality of rectilinear and non-rectilinear sections, arranged with alternating-sign directivity, whereby the angle $\gamma$, °, between the axis of body and the line tangent to the generatrix in longitudinal section, in both front and rear portions of body, does not exceed 30°, whereas the conjugation line of surfaces of reverse camber in the front portion of body is located from the conjugation line between front and mid portions of body at the distance $L_{PP}$, m, limited by the ratio:

$$0{,}01 \leq L_{PP}/L_C \leq 0{,}75,$$

the conjugation line of surfaces of reverse camber in the rear portion of body is located from the conjugation line between mid and rear portions of body at the distance $L_{PZ}$, m, limited by the ratio:

$$0{,}01 \leq L_{PZ}/L_C \leq 0{,}75,$$

where $L_C$, m, - length of the mid portion of body between the conjugation lines of the front and rear portions of body with the mid portion of body;
and the length $L_K$, m, of body and its maximum height $H_2$, m, (according to the second embodiment) in the mid portion are connected by the ratio:

$$1 \leq L_K/H_2 \leq 20.$$

In turn, the length $L_C$, m, of the mid portion of body is connected with the distance $M$, m, between trains of wheels, by the following range:

$$1 \leq L_C/M \leq 15,$$

and to the lengths of the front and rear portions of body is connected by the ratios:

$$0{,}1 \leq L_P/L_C \leq 0{,}75;$$

$$0{,}1 \leq L_Z/L_C \leq 0{,}75,$$

where $L_P$, m - length of the front portion of body from the foremost point to the conjugation line between the front portion and the mated mid portion of body;
$L_Z$, m - length of the rear portion of body from the rearmost point to the conjugation line between the rear portion and the mated mid portion of body.

Achieving the specified result according to the second embodiment is substantiated also by the fact that the area $S_C$, m$^2$, of maximum cross-section of the mid portion of body, and the area $S_P$, m$^2$, of the cross-section along the conjugation line of surfaces of reverse camber in the front portion of body, and the area $S_Z$, m$^2$, of the cross-section along the conjugation line of surfaces of reverse camber in the rear portion of body, are connected by the following ratios:

$$0{,}05 \leq S_P/S_C \leq 0{,}9;$$

$$0{,}05 \leq S_Z/S_C \leq 0{,}9.$$

Transport module according any of the two embodiments may be implemented in such way that the angle $\gamma$, °, between the axis of body and the line tangent to the generatrix in longitudinal section, in both front and rear portions of body, preferably, does not exceed 12°.
Transport module according any of the two embodiments may be implemented in such way that the angle $\gamma$, °, between the axis of body and the line tangent to the generatrix in longitudinal section, in both front and rear portions of body, does not exceed 5°.
Transport module according any of the two embodiments may be implemented in such way so that the front and/or rear cone-shaped portions of body are made frusto-conical.

**Brief description of drawings**

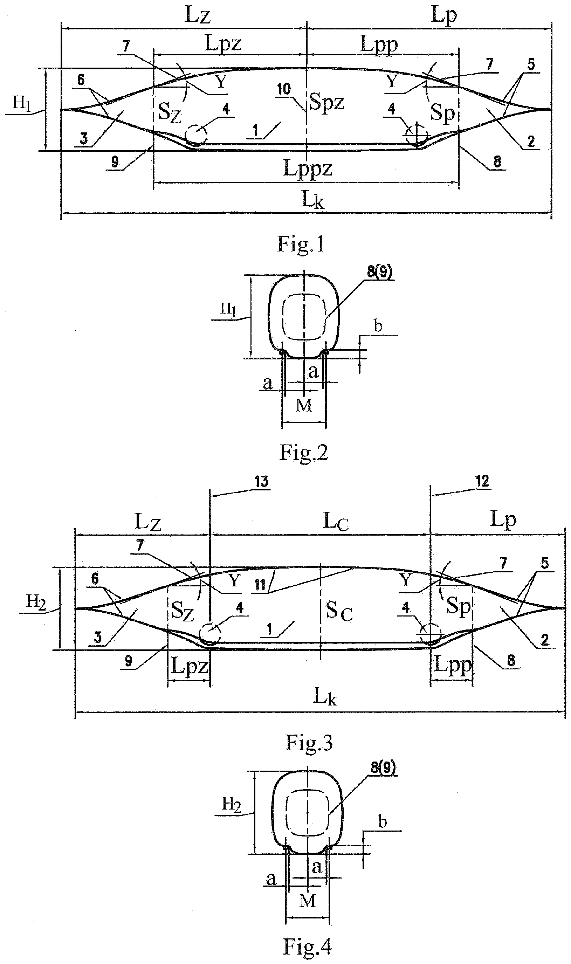

The essence of this invention, represented by first embodiment of high-speed transport module, is clarified through the drawings on Fig.1, 2:

Fig.1 - appearance of high-speed transport module - side view;
Fig.2 - appearance of high-speed transport module - frontal view (analogical to rear view).

The essence of this invention, represented by the second embodiment of high-speed transport module, is clarified in greater detail with the help of the following drawings showed on Fig.3, 4:

Fig.3 - appearance of high-speed transport module - side view;
Fig.4 - appearance of high-speed transport module - frontal view (analogical to rear view).

The essence of the present invention is also clarified on Fig.5 -15, where:

Fig.5 - appearance of high-speed transport module with convex bottom surface of body - side view;
Fig.6 - appearance of high-speed transport module with convex bottom surface of body - frontal view (rear view);
Fig.7 - appearance of high-speed transport module with flat bottom surface of body - side view;
Fig.8 - appearance of high-speed transport module with flat bottom surface of body - frontal view (rear view);
Fig.9 - appearance of high-speed transport module with convex upper surface of body with longitudinal sections of negative camber - side view;
Fig.10 - appearance of high-speed transport module with convex upper surface of body with longitudinal sections of negative camber - frontal view (rear view);
Fig.11 - appearance of high-speed transport module with convex upper and bottom surfaces of body with longitudinal sections of negative camber - side view;
Fig.12 - appearance of high-speed transport module with convex upper and bottom surfaces of body with longitudinal sections of negative camber - frontal view (rear view);
Fig.13 - appearance of high-speed transport module with concave side surface of body - top view;
Fig.14 - appearance of high-speed transport module with concave bottom surface of body - side view;
Fig.15 - appearance of high-speed transport module with concave bottom surface of body - frontal view (rear view).

**Detailed description of the invention**

The specified result is achieved by the following: in high-speed transport module, which contains a streamlined body 1 with the seamlessly mating front 2 and rear 3 portions and two trains of wheels 4 located in the bottom portion of body, *according to the first embodiment,* front 2 and rear 3 portions of body are cone-shaped with non-rectilinear generatrices 5 and 6 having alternating-sign camber, or the totality of rectilinear and non-rectilinear sections, arranged with alternating-sign directivity. Hereby, the angle $\gamma$, °, between the axis of body and the line 7 tangent to the generatrix 5, 6 in longitudinal section, in both front 2 and rear 3 portions of body, does not exceed 30° (see Fig.1).

The front 2 and rear 3 portions of body 1 (see Fig.1) of transport module embodied as cone-shaped with generatrices having alternating-sign camber, or represented by the totality of rectilinear and non-rectilinear sections, arranged with alternating-sign directivity, while keeping the required angle $\gamma$ ,°, - as model-scale data of subsonic wind tunnel AT- 11 (St-Petersburg, Russia) investigations of aerodynamic properties of high-speed transport module have demonstrated - allow to enhance body' incoming airflow.

Thus, the presence of a smooth transition of camber of the generatrix of the front cone-shaped portion of body from negative to positive, i.e. from concave form to convex form, as well as the presence of a smooth transition of camber of the generatrix of the rear cone-shaped portion of body from positive to negative, i.e. from convex form to concave form, as data of aerodynamic properties investigations have shown, allow, basically, without increasing the overall length of the front 2 and rear 3 portions of body 1 (Fig.1), thanks to the elimination of airflow pressure gradient surges, to considerably lower its aerodynamic drag coefficient.

With the front 2 and rear 3 portions of body 1 (see Fig.1) embodied as cone-shaped with generatrices 5, 6, tangent lines 7 to which, in longitudinal section, form with the axis of body 1 the angle $\gamma$,°, more than 30°, aerodynamic drag of relative airflow in the front 2 portion increases and the airflow separation may occur during its coming off from the rear 3 portion of body 1.

Transition from convex form to concave form on the front 2 and rear 3 portions of cone-shaped surfaces is performed along the conjugation lines 8 and 9, respectively, of surfaces of reverse camber, the positions of which are determined on the basis of requirements of incoming airflow optimization of body 1 in different modes of its operation and specific structural designs.

Hereby, the conjugation line 8 of surfaces of reverse camber in the front portion 2 of body 1 is located from the conjugation line 10 of the front 2 and rear 3 portions of body 1 at the distance $L_{PP}$, m, (Fig.1), limited by the ratio:

$$0,05 \leq L_{PP}/ L_{PPZ} \leq 0,75, \qquad (1)$$

and the conjugation line 9 of surfaces of reverse camber in the rear portion 3 of body 1 is located from the conjugation line 10 of the front 2 and rear 3 portions of body 1 at the distance $L_{PZ}$, m, (Fig.1), limited by the ratio:

$$0,05 \leq L_{PZ}/ L_{PPZ} \leq 0,75, \qquad (2)$$

where $L_{PPZ}$, m, (Fig.1) - the length of portion of body 1 between the conjugation lines 8, 9 of surfaces of reverse camber, respectively, in the front 2 and rear 3 portions of body 1.

The lengths $L_{PP}$, m, of the front 2 and $L_{PZ}$, m, rear 3 portions of body 1 (Fig.1) are determined on the basis of requirements of securing dynamic stability of transport module and optimizing the value of aerodynamic drag coefficient.

Decreasing the lengths of the front 2 and rear 3 portions of body 1 below the limits, defined by the ratios (1) and (2), does not allow to comply with the requirements of embodiment of these portions of body as cone-shaped with generatrices 5, 6, tangent lines 7 to which, in longitudinal section, form, with the axis of body, the angle $\gamma$, °, less than 30°, thus making it difficult to achieve a smooth transition from convex form to concave form at the specified angle $\gamma$, °, i.e. to ensure zero airflow pressure gradient surges on the front and rear portions of body and lowering aerodynamic drag coefficient. Increasing the lengths of the front 2 and rear 3 portions of body 1 above the limits, defined by the ratios (1) and (2), will lead to a penalized dynamic stability of transport module due to the resulting yawing of large panels of these portions of body.

The length $L_K$, m, (Fig.1) of body 1 and its height $H_1$, m, (Fig.1, 2) in cross section along the conjugation line 10 of the front 2 portion with the rear 3 portion of body 1 are connected by the ratio:

$$2 \leq L_K/ H_1 \leq 20. \qquad (3)$$

For practical realization of body 1 of transport module for passenger traffic, the conditions defined in the ratio (3) are regarded as optimal. Under these conditions, the requirements to transport module as regards ergonomics and optimum value of aerodynamic drag coefficient, are pretty much feasible to comply with.

Thus, with the given height of body 1, resulting from the average value of human height accepted for designing passenger traffic transport module, the optimal choice of the length of body, as regards ergonomics and minimization of body frontal surface area, is the choice within the specified range. The values given in the ratio (3), allow to considerably reduce the frontal surface area of transport module, while keeping the interior comfortable enough.

If the ratio (3) is less than 2, then, if to keep the optimized values of aerodynamic drag coefficient, it becomes impossible to meet the ergonomic and intended-use specific requirements to the form of body 1 of transport module, which will result in the discomfort to the passengers who are inside module cabin. When selecting parameters of module from the ratio (3), whereby it will be less than 2, in alternative scenario, increasing the section area of body 1 will lead to a substantial rise of aerodynamic drag.

If the ratio (3) will be more than 20, it will result in increase of the side surface area and, consequently, to a higher aerodynamic drag of transport module.

The achieving of the specified result is ensured also by the fact that the area $S_{PZ}$, m², (Fig.1) of cross section of body 1 along the conjugation line 10 of the front 2 portion with rear 3 portion of body 1 is connected with the area $S_P$, m², (Fig.1) of cross section along the conjugation line 8 of surfaces of reverse camber in the front 2 portion of body and the area Sz, m², (Fig.1) of cross section along the conjugation line 9 of surfaces of reverse camber in the rear 3 portion of body 1 by the following ratios:

$$1,2 \leq S_{PZ}/S_P \leq 20; \qquad (4)$$

$$1,2 \leq S_{PZ}/S_Z \leq 20 \qquad (5)$$

and defines the parameters of optimal airflows of transport module body 1, provided the requirements to dynamic stability and minimized airflow frontal resistance are complied with.

If to implement body 1 with values, given in the ratios (4) and (5), it appears pretty feasible to receive the optimum value of aerodynamic drag coefficient, taking into account ergonomic and performance data of transport module.

If values of ratios (4) and (5) are less than 1,2, then, to lower, respectively, frontal resistance in the front 2 portion of body 1 and to secure airflow smoothly coming off in its rear 3 portion, it becomes necessary to elongate the front 2 and rear 3 portions of body 1, which leads to a penalized dynamic stability of transport module due to the resulting yawing of large panels of body 1.

If to implement body 1 of transport module with the ratios (4) and (5) more than 20, aerodynamic drag of incoming airflow in the front 2 portion increases and the airflow separation may occur when coming off from the rear 3 portion of body 1.

Hereby, the lengths of the front 2 and rear 3 portions of body 1 are connected by the ratio:

$$0{,}25 \leq L_P/L_Z \leq 4, \qquad (6)$$

where $L_P$, m, (Fig.1) - length of the front 2 portion of body 1 from the foremost point to the conjugation line 10 thereof with the rear 3 portion;

$L_Z$, m, (Fig.1) - length of the rear 3 portion of body 1 from the rearmost point to the conjugation line 10 thereof with the front 2 portion.

The lengths $L_P$, m, of the front 2 and $L_Z$, m, of the rear 3 portions of body 1 (Fig.1) are defined on the basis of securing dynamic stability of transport module and optimizing aerodynamic drag coefficient.

Decreasing the length of the front 2 portion of body below the limits, defined by the given ratio (6), will not allow to optimize the camber of that portion as regards lowering aerodynamic drag coefficient, whereas increasing the length thereof beyond the given limits will lead to a penalized dynamic stability of transport module due to the yawing of large panel of the front 2 portion of body 1.

Decreasing the length of the rear 3 portion of body 1 below the limits, defined by the given ratio, will not allow to meet the requirements of a smooth transition from convex surface to concave surface, i.e. to ensure zero pressure gradient surges on the rear 3 portion of body 1, whereas increasing the length of the rear 3 portion of body 1 beyond the given limits will lead to a penalized dynamic stability of transport module due to the yawing of large panel of the rear 3 portion of body 1.

The choice of the value of the ratio (6) less than 0,25 and more than 4 will lead to disparity in linear dimensions of the front 2 and rear 3 portions of body 1 and, consequently, to deterioration of its aerodynamic properties.

The specified result is achieved by the following: in high-speed transport module, which contains a streamlined body 1 with the seamlessly mating front 2, mid 11 and rear 3 portions (Fig.3), as well as two trains of wheels 4 located in the bottom portion of body, *according to the second embodiment,* front 2 and rear 3 portions of body 1 are cone-shaped with non-rectilinear generatrices having alternating-sign camber, or the totality of rectilinear and non-rectilinear sections, arranged with alternating-sign directivity. Hereby, the angle $\gamma$,°, between the axis of body 1 and the line 7 tangent to the generatrix in longitudinal section, in both front 2 and rear 3 portions of body, does not exceed 30°.

The embodiment of the front 2 and rear 3 portions of body 1 (see Fig.3) of transport module as cone-shaped with generatrices, having alternating-sign camber, while keeping the required angle $\gamma$,°, as data of aerodynamic investigations have shown, will allow, thanks to the elimination of airflow pressure gradient surges, to drastically lower aerodynamic drag coefficient and optimize body' incoming airflow in different modes of operation and specific structural designs of high-speed transport module.

Thus, the presence of a smooth transition of camber of the generatrix of the front cone-shaped portion of body from negative to positive, i.e. from concave form to convex form, as well as the presence of a smooth transition of camber of the generatrix of the rear cone-shaped portion of body from positive to negative, i.e. from convex form to concave form, as data of aerodynamic properties investigations have shown, allow, basically, without increasing the overall length of the front 2 and rear 3 portions of body 1 (Fig.3), thanks to the elimination of airflow pressure gradient surges, to considerably lower its aerodynamic drag coefficient.

With the front 2 and rear 3 portions of body 1 (see Fig.3) embodied as cone-shaped with generatrices 5, 6, tangent lines 7 thereto, in longitudinal section, forming with the axis of body 1 the angle $\gamma$,°, more than 30°, aerodynamic drag of relative airflow in the front 2 portion increases and the airflow separation may occur during its coming off from the rear 3 portion of body 1.

For the transport module, both according to both first and second embodiment, it is characteristic that the embodiment of the front 2 and rear 3 portions of body 1 (see Fig.1, 3), as cone-shaped with generatrices 5, 6, tangent lines 7 to which, in longitudinal section, form with the axis of body 1 the angle $\gamma$,°, no more than 12°, allows to ensure the optimum values of aerodynamic drag coefficient of transport module while keeping the dynamic stability thereof and the interior sufficiently comfortable.

Transport module according to any of the both embodiments can be realized in such a way that embodiment of the front 2 and rear 3 portions of body 1 (see Fig.1, 3) as cone-shaped with generatrices 5, 6, tangent lines 7 to which, in longitudinal section, form with the axis of body 1 the angle $\gamma$, °, no more than 5°, allows to ensure the optimum value of aerodynamic drag coefficient while keeping the functional properties of transport module.

Transition on the front 2 and rear 3 portions of cone-shaped surfaces from convex form to concave form is performed along the conjugation lines 8 and 9 (Fig. 1 - 4), respectively, of surfaces of reverse camber, the positions of which are determined on the basis of requirements of optimization of body'1 incoming airflow in different modes of its operation and specific structural designs.

Hereby, the conjugation line 8 of surfaces of reverse camber in the front portion 2 of body 1 is located from the conjugation line 12 in the front 2 and mid 11 portions of body 1 at the distance $L_{PP}$, m, (Fig.3), limited by the ratio:

$$0{,}01 \leq L_{PP}/L_C \leq 0{,}75, \quad (7)$$

and the conjugation line 9 of surfaces of reverse camber in the rear portion of body is located from the conjugation line 13 of the mid 11 and rear 3 portions of body 1 at the distance $L_{PZ}$, m, (Fig.3), limited by the ratio:

$$0{,}01 \leq L_{PZ}/L_C \leq 0{,}75, \quad (8)$$

where $L_C$, m (Fig.3) - the length of the mid 11 portion of body 1 between the conjugation lines 12 and 13, respectively, of the front 2 and rear 3 portions with the mid 11 portion of body 1.

If to implement body 1 with values, given in the ratios (7) and (8), it becomes pretty feasible to receive the optimum value of aerodynamic drag coefficient, taking into account the limits on the overall length of transport module.

Decreasing the distance from the conjugation line 8 of surfaces of reverse camber in the front 2 portion of body to the conjugation line 12 of the front 2 and mid 11 portions of body 1 will lead to a possible airflow separation due to a large pressure gradient during its passing from the front 2 portion to the mid 11 portion of body 1 (Fig.3). Whereas increasing that distance beyond the limits, defined by the given ratio (7), will lead to a penalized dynamic stability of transport module due to the resulting yawing of large cone-shaped surface of the front 2 portion of body 1.

Decreasing the length of the front 2 portion of body 1 below the limits, defined by the given ratio (7), will not allow to optimize the choice of the camber of the front 2 (face) portion of body 1 from the perspective of lowering aerodynamic drag coefficient.

Decreasing the distance from the conjugation line of surfaces of reverse camber in the rear 3 portion of body to the conjugation line 13 of the rear 3 and mid 11 portions of body 1 (Fig.3) will lead to a possible airflow separation due to a large pressure gradient during its passing from the mid 11 portion to the rear 3 portion of body 1. Whereas increasing that distance beyond the limits, defined by the given ratio (8), will lead to a penalized dynamic stability of transport module due to the resulting yawing of large cone-shaped surface of the rear 3 portion of body 1.

Decreasing the length of the rear 3 portion of body below the limits, defined by the given ratio (8), will not allow to optimize the choice of the camber of the tail portion from the perspective of lowering aerodynamic drag coefficient.

The choice of the values of the ratios (7) and (8) less than 0,01 and more than 0,75 will lead to disparity in linear dimensions of the front 2, mid 11 and rear 3 portions of body 1 and, consequently, to deterioration of its aerodynamic properties.

Hereby, the length $L_K$, m, of body 1 and its maximum height $H_2$, m, (Fig.3,4) in the mid 11 portion (the height of body in midsection, according to the second embodiment) are connected by the ratio:

$$1 \leq L_K/H_2 \leq 20. \quad (9)$$

Embodiment of body 1 with values, specified in the ratio (9), allows to easily ensure construction of body 1 of transport module with the required, aerodynamically efficient lines.

Embodiment of body 1 of transport module with values of the ratio (9) less than 1, will lead to design difficulties in guaranteeing a smooth transition between front 2, mid 11 and rear 3 portions of body 1 (Fig.3), when trying to comply with the requirements to its shape, from the perspective of optimization of aerodynamic properties of transport module.

Embodiment of body 1 of transport module with values of the ratio (9) more than 20, will lead to a penalized dynamic stability of transport module due to the yawing of large panels of the front 2 and rear 3 portions of body 1.

In turn, the length $L_C$, m, (Fig.3) of mid 11 portion of body 1 correlates to the distance $M$, m, (Fig.4) between trains 4 of wheels within the following range:

$$1 \leq L_C/M \leq 20. \qquad (10)$$

The designed form of body 1 of transport module, ensuring high speed values, in turn, puts forward certain demands to guaranteeing its dynamic stability.

Thus, with the specified distance $M$, m, (Fig.4) between trains 4 of wheels, the choice of length $L_C$, m, of mid 11 portion of body 1 (Fig.3) with optimum value, given in the ratio (10), allows to, during motion of transport module, without any problem whatsoever, to insure the required value of its dynamic stability with the given form of body 1.

Embodiment of body 1 of transport module with values of the ratio (10) less than 1, will lead to design difficulties related to realization of the form of body 1, which will ensure smooth airflow thereof, while simultaneously securing dynamic stability, because the requirements to the optimal embodiment of body 1, as per aerodynamic drag coefficient, will lead to fineness ratio (percent elongation) of its front 2 and rear 3 portions and, correspondingly, to a penalized dynamic stability of transport module.

Embodiment of body 1 of transport module with value in the ratio (10) more than 20, with respect to limited lateral dimensions thereof, during high speed motion, leads to considerable increase in aerodynamic drag coefficient due to excessive increase of the area of side surface of body 1.

The length $L_C$, m, of mid 11 portion of body 1 (Fig.3) correlates to the lengths of front 2 and rear 3 portions of body 1 as per the ratios:

$$0,1 \leq L_P/L_C \leq 0,75; \qquad (11)$$

$$0,1 \leq L_Z/L_C \leq 0,75, \qquad (12)$$

where, $L_P$, m, - length of the front 2 portion of body 1 from the foremost point to the conjugation line 12 between front 2 and mid 11 portions of body 1 (Fig.3);

$L_{Z, M}$, - length of portion of body 1 from the rearmost point of body 1 to the conjugation line 13 between rear 3 and mid 11 portions of body 1 (Fig.3).

The specified values of ratios (11) and (12) allow without any significant difficulties to construct body 1 of transport module with the required aerodynamically efficient lines.

The aerodynamic parameters of transport module, at high speed motion thereof, are significantly affected by the length $L_C$, m, of mid 11 portion of body 1 of the distances $L_P$, m, and $L_Z$, m, on which positioned are, respectively, the conjugation line 12 of front 2 portion with mid 11 portion of body 1 the conjugation line 13 of rear 3 portion with mid 11 portion of body 1 (Fig.3).

Embodiment of body 1 of transport module with values of the ratios (11) and (12) less than 0,1 will lead to design difficulties in guaranteeing a smooth transition between front 2, mid 11 and rear 3 portions of long body 1, while meeting requirements to shape thereof, from the perspective of optimizing aerodynamic properties of transport module.

Embodiment of body 1 of transport module with values of the ratios (11) and (12) more than 0,75, will lead to a penalized dynamic stability of transport module due to the resulting, during motion, yawing of relatively large panels of the front 2 and rear 3 portions of body 1.

Achieving the specified result according to the second embodiment is substantiated also by the fact that the area $S_C$, m², of maximum cross section of mid 11 portion of body 1 is related to area $S_P$, m², of cross section along the conjugation line 8 of surfaces of reverse camber of the front 2 portion of body 1 and the area $S_{Z, M}$², of cross section along the conjugation line 9 of surfaces of reverse camber of rear 3 portion of body 1 (Fig.3) by the following ratios:

$$0,05 \leq S_P/S_C \leq 0,9; \qquad (13)$$

$$0,05 \leq S_Z/S_C \leq 0,9. \qquad (14)$$

Embodiment of body 1 with values specified in the ratios (13) and (14), allows to easily ensure construction of body 1 of transport module with the required, aerodynamically efficient lines.

The areas $S_P$, m², and $S_Z$, m², correspondingly, of maximum cross section of the front 2 and rear 3 portions of body 1, with regard to the area $S_C$, m², of maximum cross section of the mid 11 portion of body 1 determine the conditions of optimum airflows of body 1 while guaranteeing its dynamic stability requirements.

Embodiment of body 1 of transport module with values of the ratios (13) and (14) more than 0,9 and less than 0,05, will lead to literally ineffective steps to decrease the area of the frontal surface of body 1.

For transport module according to both first and second embodiments, it is characteristic that the side surfaces of body 1 may have negative camber (Fig.13), whereas the bottom surface of body 1 may be flat (Fig.7, 8, 9, 10), or the bottom surface of body 1 may have negative (can be concave) (Fig.14, 15), or positive (can be convex) camber (Fig.1-6, 11, 12).

It is expedient to embody the upper surface of body 1 with longitudinal sections of negative camber (Fig.10, 12). Alternative option of embodiment of bottom and upper surfaces of body 1, with any geometry options of side surface of body, is to embody bottom and upper surfaces of body 1 with longitudinal sections of negative camber of those surfaces (Fig.12). Such practical realization of body 1 allows to considerably reduce the frontal surface area of body 1 of transport module, while guaranteeing the required interior comfort, as well as optimizing ergonomic parameters of layout of the seats and aisles between them.

On the bottom surface of body 1, according to either embodiment of the invention, two symmetrical longitudinal sections with negative camber of surface can be arranged (Fig.2, 4, 12).

Those sections play significant function in reducing the air resistance to transport module motion. Specific positioning of those longitudinal sections of negative camber of the surface and their practical embodiments are defined by tackling the task of reducing frontal surface area of body 1, to obtain an optimum value of aerodynamic drag coefficient of body in the zone of wheel trains.

Hereby, the conjugation lines of longitudinal sections of negative camber of the surface, with bottom surface of body 1 are positioned (Fig.2, 4, 12) at distance $a$, m, from vertical plane of body symmetry, defined by the ratio:

$$0,05 \leq a/H \leq 0,5. \qquad (15)$$

Simultaneously, the conjugation lines of longitudinal sections of negative camber of the surface, with side surfaces of body 1 are positioned (Fig.2,4,12) at distance $b$, m, from bottom surface of body 1, defined by the ratio:

$$0,04 \leq b/H \leq 0,4, \qquad (16)$$

where $H$, m - maximum height of body in cross section
(correspondingly, $H_1$, m, - as per the first embodiment of the present invention, and $H_2$, m, - per the second embodiment of the present invention in midsection of the mid 11 (Fig.1 - 12) portion of body 1).

Optimum condition for practical realization of body 1 of transport module, intended for passenger traffic, is the solution based on the interrelation of module parameters presented in ratios (15) and (16). Under these ratios, it becomes pretty feasible to meet the requirements to transport module as regards ergonomics and obtaining of optimum value of aerodynamic drag coefficient.

Embodiment of transport module with ratios (15) and (16) less than 0,05 and 0,04, respectively, makes it more difficult to place wheels 4 in the cavities arranged in body, which may also penalize aerodynamic parameters of transport module during motion.

Selection of values in ratios (15) and (16) more than 0,5 and 0,4, respectively, is inexpedient, due to a substantial deviation from the form of body with lowest aerodynamic drag coefficient.

For transport module, according to any of the two embodiments of the present invention, on upper surface of body 1, two symmetrical longitudinal sections with negative camber of surface may be arranged (Fig. 10, 12).

Those sections render significant effect on lowering air drag in traction resistance and meeting ergonomic parameters in layout of the seats and aisles between them, and are selected with account to requirements to contract the frontal surface area of body of transport module while meeting ergonomic requirements to transport module.

Hereby, the conjugation lines of longitudinal sections of negative camber of surface, with upper surface of body 1, are positioned at distance $c$, m, (Fig.10,12) from vertical plane of body symmetry, defined by the ratio:

$$0,05 \leq c/H \leq 0,5. \qquad (17)$$

Simultaneously, the conjugation lines of longitudinal sections of negative camber of the surface, with side surfaces of body 1 are positioned at distance $d$, m, (Fig.10,12) from bottom surface of body 1, defined by the ratio:

EP 3 604 090 B1

$$0{,}2 \leq d/H \leq 0{,}9, \qquad (18)$$

where $H$, m - maximum height of body in cross section (correspondingly, $H_1$, m, - as per the first embodiment of the present invention, and $H_2$, m, - per the second embodiment of the present invention in midsection of the mid 11 (Fig. 6,8,10,12) portion of body 1).

Embodiment of body 1 of transport module with values of ratios (17) and (18) more than, correspondingly, 0,5 and 0,9, and less than, correspondingly, 0,05 and 0,2, will mean that the measures, undertaken with the aim to contract frontal surface area of body, and trying to simultaneously meet ergonomic requirements in layout of the seats and aisles between them, will become ineffective or contradicting.

Embodiment of transport module with values of ratios (17) and (18) less than 0,05 and 0,2, respectively, is inexpedient due to the insufficient contraction of midsection area, which penalizes aerodynamic properties of transport module at motion, or does not allow to meet ergonomic requirements to transport module.

Selection of values in ratios (17) and (18) more than 0,5 and 0,9, respectively, is inexpedient, due to substantial deviation from the form of body with lowest aerodynamic drag coefficient. Otherwise, the measures undertaken with the aim to contract frontal surface area of body, will become ineffective and will not allow to meet ergonomic requirements in layout of the seats and aisles between them.

Transport module according to any of the two embodiments may be implemented in such way that generatrices of the front 2 and/or rear 3 cone-shaped portions of body 1 in vertical plane have higher degree of curvature, than in horizontal plane, whereby the vertex of the frontal 2 cone-shaped portion and/or the vertex of the rear 3 cone-shaped portion of body 1 is realized as a wedge, the rib of which is forming, respectively, the front and/or rear edge of body 1, positioned in horizontal plane.

Making generatrices of the front 2 and/or rear 3 frusto-conical portions of body 1 with degree of curvature in vertical plane higher than in horizontal plane (Fig. 2,4), while having the airflow formed on the plane-wedge profile, flowing onto front profile and coming off from the rear edge, gives stabilizing effect on transport module in vertical plane in the direction of its motion path.

Transport module as per any of the two embodiments may be implemented also in such way that the generatrices of the front 2 and/or rear 3 cone-shaped portions of body 1 in horizontal plane have higher degree of curvature, than in vertical plane, whereby the vertex of the frontal 2 cone-shaped portion and/or the vertex of the rear 3 cone-shaped portion of body 1 is realized as a wedge, the rib of which forms, respectively, the front and/or rear edge of body 1, positioned in vertical plane.

Embodiment of generatrices of the front 2 and/or rear 3 cone-shaped portions of body 1 with degree of curvature in horizontal plane higher than in vertical plane (Fig.2, 4), the airflow formed on the plane-wedge profile, flowing onto front profile and coming off from the rear edge, gives stabilizing effect on transport module in horizontal plane in the direction of its motion path.

For transport module according to both embodiments, it is distinctive that the front and/or rear cone-shaped portions of body are made frusto-conical (not shown on Figs).

Embodiment of the front and rear cone-shaped portions of body 1 in the form of frustum of cone (with cutting off the sharp front and rear cone-shaped portions 2 and 3 of body 1) allows to easily guarantee the implementation of transport body with shortcut panel overhands of the front and rear portions thereof, which increases dynamic stability of the transport module, excludes yawing of panels of body, and, as a consequence, guarantees substantial stabilization of the position of transport module in the direction of its motion path while securing all required aerodynamically efficient lines and streamlined shape.

The motion of transport modules occurs at the speeds of 300 km/hour and more. At such values of motion speed, the key factor influencing the energy data of transport module is its resistance to the incoming airflow, the value of which is proportional to motion velocity squared, the front surface area (midsection) and aerodynamic drag coefficient.

As model-scale data of subsonic wind tunnel AT - 11 (St-Petersburg, Russia) investigations of aerodynamic properties of high-speed transport module have demonstrated, the technical parameters of transport modules specified in the present invention, are optimized and correlate with the calculated values available from mathematical simulation of bodies of high-speed transport modules.

Practical implementation of the present invention will allow to considerably lower the impact of anti-balance external factors and enhance aerodynamic properties of high-speed transport module, which, as a result, will enhance energy data, and, correspondingly, improve economic parameters of the transport system by Yunitski.

Information sources

1. Patent RU № 2201368, МПК B 62 D 35/00, Publ. 27.03.2003.
2. Patent RU № 2201369, МПК B 62 D 35/00, Publ. 27.03.2003.
3. Patent RU № 2203194, МПК B 62 D 35/00, Publ. 27.04.2003.
4. Patent RU № 2203195, МПК B 62 D 35/00, Publ. 27.04.2003.
5. Patent EA № 003490, МПК B 62 D 35/00, Publ. 26.06.2003.
6. Patent EA № 003533, МПК B 62 D 35/00, Publ. 26.06.2003.
7. Patent EA № 003535, МПК B 62 D 35/00, Publ. 26.06.2003.

**Claims**

1. High-speed transport module, containing a streamlined body (1) with seamlessly mating front (2) and rear (3) portions and two trains of wheels (4) located in the bottom portion of body (1), *wherein* the front (2) and rear (3) portions of body are cone-shaped with non-rectilinear generatrices (5, 6) having alternating-sign camber or the totality of rectilinear and non-rectilinear sections, arranged with alternating-sign directivity, whereby the angle $\gamma,°$, between the longitudinal axis of body (1) and the line (7) tangent to the generatrix (5, 6) in longitudinal section, in both front (2) and rear (3) portions of body (1), does not exceed 30°, **characterized in that** the conjugation line of surfaces of negative camber in the front (2) portion of body is located - from the conjugation line (10) between the front (2) and rear (3) portions of body (1) - at the distance $L_{PP}$, m, limited by the ratio:

$$0{,}05 \leq L_{PP}/L_{PPZ} \leq 0{,}75,$$

the conjugation line (9) of surfaces of negative camber in the rear (3) portion of body (1) is located - from the conjugation line (10) between the front (2) and rear (3) portions of body (1) - at the distance $L_{PZ}$, m, limited by the ratio:

$$0{,}05 \leq L_{PZ}/L_{PPZ} \leq 0{,}75,$$

where $L_{PPZ}$, m, - length of the portion of body (1) between the conjugation lines (8, 9) of surfaces of negative camber in the front (2) and rear (3) portions of body (1), and length $L_K$, m, of body and its height $H_1$, m, in cross section along the conjugation line (10) between the front (2) and rear (3) portions of body (1) are connected by the ratio:

$$2 \leq L_K/H_1 \leq 20,$$

wherein the area $S_{PZ}$, m$^2$, of cross-section of body (1) along the conjugation line (10) between the front (2) and rear (3) portions of body (1), and the area $S_P$, m$^2$, of cross-section along the conjugation line (8) of surfaces of reverse camber in the front (2) portion of body (1), are connected by the ratio:

$$1{,}2 \leq S_{PZ}/S_P \leq 20,$$

and wherein the area $S_{PZ}$, m$^2$, of cross-section of body along the conjugation line (10) between the front (2) and rear (3) portions of body (1), and the area $S_{Z,M}$$^2$, of cross-section along the conjugation line (9) of surfaces of reverse camber in the rear (3) portion of body (1), are connected by the ratio:

$$1{,}2 \leq S_{PZ}/S_Z \leq 20,$$

and wherein the lengths of the front (2) and rear (3) portions of body (1) are connected by the ratio:

$$0{,}25 \leq L_P/L_Z \leq 4,$$

where $L_P$, m - length of the front (2) portion of body (1) from the foremost point to the conjugation line (10) between front (2) portion and rear (3) portion of body (1);
$L_{Z,M}$ - length of the rear (3) portion of body (1) from the rearmost point to the conjugation line (10) between the rear (3) portion and the front (2) portion of body (1).

2. High-speed transport module, containing a streamlined body (1) with seamlessly mating front (2), mid (11) and rear (3) portions and two trains of wheels (4) located in the bottom portion of body (1), *wherein* the front (2) and rear (3) portions of body (1) are cone-shaped with non-rectilinear generatrices having alternating-sign camber, or the totality of rectilinear and non-rectilinear sections, arranged with alternating-sign directivity, whereby the angle $\gamma$, °, between the longitudinal axis of body (1) and the line (7) tangent to the generatrix (5, 6) in longitudinal section, in both front (2) and rear (3) portions of body (1), does not exceed 30°, whereas the conjugation line (8) of surfaces of negative camber in the front (2) portion of body (1) is located - from the conjugation line (12) between the front (2) and mid (11) portions of body (1) - at the distance $L_{PP}$, m, limited by the ratio:

$$0,01 \leq L_{PP}/L_C \leq 0,75,$$

the conjugation line (9) of surfaces of reverse camber in the rear (3) portion of body (1) is located - from the conjugation line (13) between mid (11) and rear (3) portions of body (1) - at the distance $L_{PZ}$, m, limited by the ratio:

$$0,01 \leq L_{PZ}/L_C \leq 0,75,$$

where $L_C$, m - length of the mid (11) portion of body (1) between the conjugation lines (12, 13) of the front (2) and rear (3) portions of body (1) with the mid (11) portion of body (1); and length $L_K$, m, of body and its maximum height $H_2$, m, in the mid (11) portion, are connected by the ratio:

$$1 \leq L_K/H_2 \leq 20.$$

3. Transport module as claimed in claim 2, *characterized in that* the length Lc, m, of the mid (11) portion of body (1), and distance M, m, between trains of wheels (4), are connected by the ratio:

$$1 \leq L_C/M \leq 20.$$

4. Transport module as claimed in claim 2, *characterized in that* the lengths of the front (2), mid (11) $L_C$, m, and rear (3) portions of body (1) are connected by the ratio:

$$0,1 \leq L_P/L_C \leq 0,75;$$

$$0,1 \leq L_Z/L_C \leq 0,75,$$

where

$L_P$, m - length of the front (2) portion of body (1) from the foremost point to the conjugation line (12) between the front (2) and mid (11) portions of body (1);
$L_Z$, m - length of the rear (3) portion of body (1) from the rearmost point to the conjugation line (13) between the rear (3) and mid (11) portions of body (1).

5. Transport module as claimed in any of claims 2 - 4, *characterized in that* the area $S_C$, m², of maximum cross-section of the mid (11) portion of body (1), and the area $S_P$, m², of cross-section along the conjugation line (12) of surfaces of reverse camber in the front (2) portion of body (1), are connected by the ratio:

$$0,05 \leq S_P/S_C \leq 0,9.$$

6. Transport module as claimed in any of claims 2 - 4, *characterized in that* the area $S_C$, m², of maximum cross-section of the mid (11) portion of body (1), and the area $S_Z$, m², of cross-section along the conjugation line (13) of surfaces of reverse camber in the rear (3) portion of body (1), are connected by the ratio:

$$0,05 \leq S_Z/S_C \leq 0,9.$$

7. Transport module as claimed in claim 1 or claim 2, ***characterized in that*** the angle $\gamma$, °, between the longitudinal axis of body and the line (7) tangent to the generatrix in (5, 6) longitudinal section, in both front (2) and rear (3) portions of body (1), does not exceed 12°.

8. Transport module as claimed in claim 1 or claim 2, ***characterized in that*** the angle $\gamma$, °, between the longitudinal axis of body and the line (7) tangent to the generatrix (5, 6) in longitudinal section, in both front (2) and rear (3) portions of body (1), does not exceed 5°.

**Patentansprüche**

1. Hochgeschwindigkeitstransportmodul, enthaltend einen Stromlinienkörper (1) mit nahtlos aneinander anschließenden vorderen (2) und hinteren (3) Abschnitten und zwei im unteren Abschnitt des Körpers (1) angeordneten Radsätzen (4), wobei die vorderen (2) und hinteren (3) Abschnitte des Körpers kegelförmig mit nicht geradlinigen Erzeugenden (5, 6) ausgebildet sind und eine Krümmung mit wechselndem Vorzeichen oder die Gesamtheit der mit einer Richtcharakteristik mit wechselndem Vorzeichen angeordneten geradlinigen und nicht geradlinigen Abschnitte aufweisen, wobei der Winkel $\gamma$, ° zwischen der Längsachse des Körpers (1) und der zur Erzeugenden (5, 6) im Längsschnitt tangentialen Linie (7) sowohl in den vorderen (2) als auch in den hinteren (3) Abschnitten des Körpers (1) 30° nicht überschreitet, **dadurch gekennzeichnet, daß** die Konjugationslinie der Flächen mit negativer Krümmung im vorderen (2) Abschnitt des Körpers mit einem Abstand $L_{PP}$, m von der Konjugationslinie (10) zwischen den vorderen (2) und hinteren (3) Abschnitten des Körpers (1) angeordnet ist, der durch das Verhältnis beschränkt ist:

$$0,05 \leq L_{PP}/L_{PPZ} \leq 0,75,$$

die Konjugationslinie (9) der Flächen mit negativer Krümmung im hinteren (3) Abschnitt des Körpers (1) mit einem Abstand $L_{PZ}$, von der Konjugationslinie (10) zwischen den vorderen (2) und hinteren (3) Abschnitten des Körpers (1) angeordnet ist, der durch das Verhältnis beschränkt ist:

$$0,05 \leq L_{PZ}/L_{PPZ} \leq 0,75,$$

wobei $L_{PPZ}$, - die Länge des Abschnitts des Körpers (1) zwischen den Konjugationslinien (8, 9) der Flächen mit negativer Krümmung im vorderen (2) und hinteren (3) Abschnitt des Körpers (1), und die Länge $L_K$, des Körpers und seine Höhe $H_1$, m, im Querschnitt entlang der Konjugationslinie (10) zwischen dem vorderen (2) und hinteren (3) Abschnitt des Körpers (1) durch das Verhältnis verbunden sind:

$$2 \leq L_K/H_1 \leq 20,$$

wobei die Fläche $S_{PZ}$, m² des Querschnitts des Körpers (1) entlang der Konjugationslinie (10) zwischen den vorderen (2) und hinteren (3) Abschnitten des Körpers (1) und die Fläche $S_P$, m² des Querschnitts entlang der Konjugationslinie (8) von Flächen mit umgekehrter Krümmung im vorderen (2) Abschnitt des Körpers (1) durch das Verhältnis verbunden sind:

$$1,2 \leq S_{PZ}/S_P \leq 20,$$

und wobei die Fläche $S_{PZ}$, m² des Querschnitts des Körpers entlang der Konjugationslinie (10) zwischen den vorderen (2) und hinteren (3) Abschnitten des Körpers (1) und die Fläche $S_Z$, m² des Querschnitts entlang der Konjugationslinie (9) von Flächen mit umgekehrter Krümmung im hinteren (3) Abschnitt des Körpers (1) durch das Verhältnis verbunden sind:

$$1{,}2 \leq S_{PZ}/S_Z \leq 20,$$

und wobei die Längen der vorderen (2) und hinteren (3) Abschnitte des Körpers (1) durch das Verhältnis verbunden sind:

$$0{,}25 \leq L_P/L_Z \leq 4,$$

wobei Lp, m - die Länge des vorderen (2) Abschnitts des Körpers (1) vom vordersten Punkt bis zur Konjugationslinie (10) zwischen dem vorderen (2) Abschnitt und dem hinteren (3) Abschnitt des Körpers (1) ist; $L_{z,\,M}$ - die Länge des hinteren (3) Abschnitts des Körpers (1) vom hintersten Punkt bis zur Konjugationslinie (10) zwischen dem hinteren (3) Abschnitt und dem vorderen (2) Abschnitt des Körpers (1) ist.

2. Hochgeschwindigkeitstransportmodul, enthaltend einen Stromlinienkörper (1) mit nahtlos aneinander anschließenden vorderen (2), mittleren (11) und hinteren (3) Abschnitten und zwei im unteren Abschnitt des Körpers (1) angeordneten Radsätzen (4), wobei die vorderen (2) und hinteren (3) Abschnitte des Körpers (1) kegelförmig mit nicht geradlinigen Erzeugenden ausgebildet sind und eine Krümmung mit wechselndem Vorzeichen oder die Gesamtheit der mit einer Richtcharakteristik mit wechselndem Vorzeichen angeordneten geradlinigen und nicht geradlinigen Abschnitte aufweisen, wobei der Winkel $\gamma$, ° zwischen der Längsachse des Körpers (1) und der zur Erzeugenden (5, 6) im Längsschnitt tangentialen Linie (7) sowohl in den vorderen (2) als auch in den hinteren (3) Abschnitten des Körpers (1) 30° nicht überschreitet, wobei die Konjugationslinie (8) der Flächen mit negativer Krümmung im vorderen (2) Abschnitt des Körpers (1) mit einem Abstand Lpp, m von der Konjugationslinie (12) zwischen den vorderen (2) und mittleren (11) Abschnitten des Körpers (1) angeordnet ist, der durch das Verhältnis beschränkt ist:

$$0{,}01 \leq L_{PP}/L_C \leq 0{,}75,$$

die Konjugationslinie (9) der Flächen mit umgekehrter Krümmung im hinteren (3) Abschnitt des Körpers (1) mit einem Abstand $L_{PZ}$, m von der Konjugationslinie (13) zwischen den mittleren (11) und hinteren (3) Abschnitten des Körpers (1) angeordnet ist, der durch das Verhältnis beschränkt ist:

$$0{,}01 \leq L_{PZ}/L_C \leq 0{,}75,$$

wobei Lc, m - die Länge des mittleren (11) Abschnitts des Körpers (1) zwischen den Konjugationslinien (12, 13) der vorderen (2) und hinteren (3) Abschnitte des Körpers (1) mit dem mittleren (11) Abschnitt des Körpers (1); und die Länge $L_K$, m des Körpers und seine maximale Höhe $H_2$, m im mittleren Abschnitt (11) durch das Verhältnis verbunden sind:

$$1 \leq L_K/H_2 \leq 20.$$

3. Transportmodul nach Anspruch 2, **dadurch gekennzeichnet, dass** die Länge Lc, m, des mittleren (11) Abschnitts des Körpers (1) und der Abstand M, m, zwischen den Sätzen von Rädern (4), durch das Verhältnis verbunden sind:

$$1 \leq L_C/M \leq 20.$$

4. Transportmodul nach Anspruch 2, **dadurch gekennzeichnet, dass** die Längen der vorderen (2), mittleren (11) Lc, m, und hinteren (3) Abschnitte des Körpers (1) durch das Verhältnis verbunden sind:

$$0{,}1 \leq L_P/L_C \leq 0{,}75;$$

$$0{,}1 \leq L_Z/L_C \leq 0{,}75,$$

wobei

*Lp,* m - die Länge des vorderen (2) Abschnitts des Körpers (1) vom vordersten Punkt bis zur Konjugationslinie (12) zwischen den vorderen (2) und den mittleren (11) Abschnitten des Körpers (1) ist;

*Lz,* m - die Länge des hinteren (3) Abschnitts des Körpers (1) vom hintersten Punkt bis zur Konjugationslinie (13) zwischen den hinteren (3) und den mittleren (11) Abschnitten des Körpers (1) ist.

**5.** Transportmodul nach einem der Ansprüche 2 bis 4, **dadurch gekennzeichnet, dass** die Fläche Sc, m² des maximalen Querschnitts des mittleren (11) Abschnitts des Körpers (1) und die Fläche Sp, m² des Querschnitts entlang der Konjugationslinie (12) von Flächen mit umgekehrter Krümmung im vorderen (2) Abschnitt des Körpers (1) durch das Verhältnis verbunden sind:

$$0{,}05 \leq S_P/S_C \leq 0{,}9.$$

**6.** Transportmodul nach einem der Ansprüche 2 bis 4, **dadurch gekennzeichnet, dass** die Fläche Sc, m² des maximalen Querschnitts des mittleren (11) Abschnitts des Körpers (1) und die Fläche Sz, m² des Querschnitts entlang der Konjugationslinie (13) von Flächen mit umgekehrter Krümmung im hinteren (3) Abschnitt des Körpers (1) durch das Verhältnis verbunden sind:

$$0{,}05 \leq S_Z/S_C \leq 0{,}9.$$

**7.** Transportmodul nach Anspruch 1 oder Anspruch 2, **dadurch gekennzeichnet, dass** der Winkel $\gamma$, ° zwischen der Längsachse des Körpers und der Linie (7), die die Erzeugende im Längsschnitt (5, 6) tangiert, sowohl in den vorderen (2) als auch in den hinteren (3) Abschnitten des Körpers (1) nicht mehr als 12° beträgt.

**8.** Transportmodul nach Anspruch 1 oder Anspruch 2, **dadurch gekennzeichnet, dass** der Winkel $\gamma$, ° zwischen der Längsachse des Körpers und der Linie (7), die die Erzeugende (5, 6) im Längsschnitt sowohl in den vorderen (2) als auch in den hinteren (3) Abschnitten des Körpers (1) tangiert, nicht mehr als 5° beträgt.

## Revendications

**1.** Module de transport à grande vitesse, contenant un corps profilé (1) avec des portions antérieure (2) et postérieure (3) s'accouplant parfaitement et deux trains de roues (4) situés dans la portion inférieure du corps (1), *dans lequel* les portions antérieure (2) et postérieure (3) du corps sont en forme de cône avec des génératrices non rectilignes (5, 6) présentant un carrossage à signe alterné ou la totalité des sections rectilignes et non rectilignes, disposées avec une directivité à signe alterné, dans lequel l'angle $\gamma$, °, entre l'axe longitudinal du corps (1) et la ligne (7) tangente à la génératrice (5, 6) en section longitudinale, à la fois dans les portions antérieure (2) et postérieure (3) du corps (1), ne dépasse pas 30°, **caractérisé en ce que** la ligne de conjugaison des surfaces de carrossage négatif dans la portion antérieure (2) du corps est située - à partir de la ligne de conjugaison (10) entre les portions antérieure (2) et postérieure (3) du corps (1) - à la distance *Lpp,* m, limitée par le rapport:

$$0{,}05 \leq L_{PP}/L_{PPZ} \leq 0{,}75,$$

la ligne de conjugaison (9) des surfaces de carrossage négatif dans la portion postérieure (3) du corps (1) est située - à partir de la ligne de conjugaison (10) entre les portions antérieure (2) et postérieure (3) du corps (1) - à la distance $L_{PZ}$, m, limitée par le rapport:

$$0{,}05 \leq L_{PZ}/L_{PPZ} \leq 0{,}75,$$

dans lequel $L_{PPZ}$, m, - la longueur de la portion du corps (1) entre les lignes de conjugaison (8, 9) des surfaces de carrossage négatif dans les portions antérieure (2) et postérieure (3) du corps (1), et la longueur $L_K$, m, du corps et sa hauteur $H_1$, m, en section transversale le long de la ligne de conjugaison (10) entre les portions antérieure (2) et postérieure (3) du corps (1), sont reliées par le rapport:

$$2 \leq L_K/H_1 \leq 20,$$

dans lequel la superficie $S_{PZ}$, m$^2$ de la section transversale du corps (1) le long de la ligne de conjugaison (10) entre les portions antérieure (2) et postérieure (3) du corps (1), et la superficie $S_P$, m$^2$ de la section transversale le long de la ligne de conjugaison (8) des surfaces de carrossage inversé dans la portion antérieure (2) du corps (1), sont reliées par le rapport:

$$1,2 \leq S_{PZ}/S_P \leq 20,$$

et dans lequel la superficie $S_{PZ}$, m$^2$ de la section transversale du corps le long de la ligne de conjugaison (10) entre les portions antérieure (2) et postérieure (3) du corps (1), et la superficie $S_z$, M$^2$ de la section transversale le long de la ligne de conjugaison (9) des surfaces de carrossage inversé dans la portion postérieure (3) du corps (1), sont reliées par le rapport:

$$1,2 \leq S_{PZ}/S_Z \leq 20,$$

et dans lequel les longueurs des portions antérieure (2) et postérieure (3) du corps (1) sont reliées par le rapport:

$$0,25 \leq L_P/L_Z \leq 4,$$

dans lequel Lp, m - la longueur de la portion antérieure (2) du corps (1) à partir du point le plus avancé jusqu'à la ligne de conjugaison (10) entre la portion antérieure (2) et la portion postérieure (3) du corps (1);
$Lz,_M$ - la longueur de la portion postérieure (3) du corps (1) à partir du point le plus arriéré jusqu'à la ligne de conjugaison (10) entre la portion postérieure (3) et la portion antérieure (2) du corps (1).

2. Module de transport à grande vitesse, contenant un corps profilé (1) avec des portions antérieure (2), médiane (11) et postérieure (3) s'accouplant parfaitement et deux trains de roues (4) situés dans la portion inférieure du corps (1), *dans lequel* les portions antérieure (2) et postérieure (3) du corps (1) sont en forme de cône avec des génératrices non rectilignes présentant un carrossage à signe alterné, ou la totalité des sections rectilignes et non rectilignes, disposées avec une directivité à signe alterné, dans lequel l'angle $\gamma$, °, entre l'axe longitudinal du corps (1) et la ligne (7) tangente à la génératrice (5, 6) en section longitudinale, à la fois dans les portions antérieure (2) et postérieure (3) du corps (1), ne dépasse pas 30°, tandis que la ligne de conjugaison (8) des surfaces de carrossage négatif dans la portion antérieure (2) du corps (1) est située - à partir de la ligne de conjugaison (12) entre les portions antérieure (2) et médiane (11) du corps (1) - à la distance *Lpp,* m, limitée par le rapport:

$$0,01 \leq L_{PP}/L_C \leq 0,75,$$

la ligne de conjugaison (9) des surfaces de carrossage inversé dans la portion postérieure (3) du corps (1) est située - à partir de la ligne de conjugaison (13) entre les portions moyenne (11) et postérieure (3) du corps (1) - à la distance $L_{PZ}$, m, limitée par le rapport:

$$0,01 \leq L_{PZ}/L_C \leq 0,75,$$

dans lequel *Lc*, m - la longueur de la portion médiane (11) du corps (1) entre les lignes de conjugaison (12, 13) des portions antérieure (2) et postérieure (3) du corps (1) avec la portion médiane (11) du corps (1);
et la longueur $L_K$, m du corps et sa hauteur maximale $H_2$, m, dans la portion médiane (11), sont reliées par le rapport:

$$1 \leq L_K/H_2 \leq 20.$$

3. Module de transport selon la revendication 2, *caractérisé en ce que* la longueur *Lc*, m de la portion médiane (11) du corps (1) et la distance $M$, m entre les trains de roues (4), sont reliées par le rapport:

$$1 \leq Lc/M \leq 20.$$

4. Module de transport selon la revendication 2, *caractérisé en ce que* les longueurs des portions antérieure (2), médiane (11) $Lc$, m, et postérieure (3) du corps (1) sont reliées par le rapport:

$$0,1 \leq L_P/L_C \leq 0,75;$$

$$0,1 \leq L_Z/L_C \leq 0,75,$$

dans lequel

$Lp$, m - la longueur de la portion antérieure (2) du corps (1) à partir du point le plus avancé jusqu'à la ligne de conjugaison (12) entre la portion antérieure (2) et la portion médiane (11) du corps (1),
$Lz$, $_M$ - la longueur de la portion postérieure (3) du corps (1) à partir du point le plus arriéré jusqu'à la ligne de conjugaison (13) entre les portions postérieure (3) et médiane (11) du corps (1).

5. Module de transport selon quelconque des revendications 2-4, *caractérisé en ce que* la superficie Sc, $m^2$ de la section transversale maximale de la portion médiane (11) du corps (1) et la superficie Sp, $m^2$ de la section transversale le long de la ligne de conjugaison (12) des surfaces de carrossage inversé dans la portion antérieure (2) du corps (1), sont reliées par le rapport:

$$0,05 \leq S_P/S_C \leq 0,9.$$

6. Module de transport selon quelconque des revendications 2-4, *caractérisé en ce que* la superficie Sc, $m^2$ de la section transversale maximale de la portion médiane (11) du corps (1) et la superficie Sz, $m^2$ de la section transversale le long de la ligne de conjugaison (13) des surfaces de carrossage inversé dans la portion postérieure (3) du corps (1), sont reliées par le rapport:

$$0,05 \leq S_Z/S_C \leq 0,9.$$

7. Module de transport selon la revendication 1 ou la revendication 2, *caractérisé en ce que* l'angle $\gamma$, °, entre l'axe longitudinal du corps et la ligne (7) tangente à la génératrice (5, 6) en section longitudinale, à la fois dans les portions antérieure (2) et postérieure (3) du corps (1), ne dépasse pas 12°.

8. Module de transport selon la revendication 1 ou la revendication 2, *caractérisé en ce que* l'angle $\gamma$, °, entre l'axe longitudinal du corps et la ligne (7) tangente à la génératrice (5, 6) en section longitudinale, à la fois dans les portions antérieure (2) et postérieure (3) du corps (1), ne dépasse pas 5°.

Fig.1

Fig.2

Fig.3

Fig.4

**EP 3 604 090 B1**

**REFERENCES CITED IN THE DESCRIPTION**

**Patent documents cited in the description**

- RU 2201368
- RU 2201369
- RU 2203194
- RU 2203195
- EA 003490
- EA 003533
- EA 003535
- US 2011198145 A